(19) Europäisches Patentamt
European Patent Office
Office européen des brevets

(11) **EP 4 535 904 A1**

(12) **EUROPEAN PATENT APPLICATION**
published in accordance with Art. 153(4) EPC

(43) Date of publication:
**09.04.2025 Bulletin 2025/15**

(51) International Patent Classification (IPC):
*H04W 72/12* (2023.01)     *H04W 72/04* (2023.01)

(21) Application number: **22943245.5**

(22) Date of filing: **27.05.2022**

(86) International application number:
**PCT/CN2022/095769**

(87) International publication number:
**WO 2023/226047 (30.11.2023 Gazette 2023/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **LI, Mingju
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **CHANNEL TRANSMISSION METHOD AND APPARATUS, DEVICE, AND READABLE STORAGE MEDIUM**

(57) The present disclosure relates to the field of communications and provides a channel transmission method and apparatus, a device, and a readable storage medium. The method comprises: receiving first configuration information, the first configuration information being used for configuring N search space sets having a link relationship, and each search space set comprising a physical downlink control channel (PDCCH) candidate, wherein N is an integer greater than 1; and receiving indication information, and if the indication information indicates a set of transmission configuration indication (TCI) states, determining, from N PDCCH candidates, a reference PDCCH candidate for transmission. When a terminal receives the PDCCH by using the set of TCI states, a reasonable reference PDCCH candidate determination mode is used, so as to maintain consensus between the terminal and a base station on the use of the reference PDCCH candidate.

First configuration information is received, where the first configuration information is used to configure N search space sets having a link relationship, and N is an integer greater than 1 — 201

↓

Indication information is received, and a reference PDCCH candidate for transmission is determined from the N PDCCH candidates in a case that the indication information indicates one set of TCI states — 202

FIG. 2

## Description

### TECHNICAL FIELD

The present disclosure relates to the field of communications, and in particular to a channel transmission method, a channel transmission device, an apparatus and a readable storage medium.

### BACKGROUND

In a Rel-16 system of new radio (New Radio, NR), transmission configuration indication (Transmission Configuration Indication, TCI) of each channel and/or reference signal is independently indicated. In Rel-17, in order to reduce signaling overhead, indication is performed by using a set of TCI states.

However, in Rel-17, only an indication method for a set of TCI states for a single transmission and receiving point (Transmission and Receiving Point, TRP) is considered.

### SUMMARY

The embodiments of the present disclosure provide a channel transmission method, a channel transmission device, an apparatus and a readable storage medium, which can improve transmission accuracy of PDCCH. The technical solutions are as follows.

According to an aspect of the present disclosure, a channel transmission method is provided, which is performed by a terminal, and the method includes:

receiving first configuration information, where the first configuration information is used to configure N search space sets having a link relationship, each of the N search space sets includes one physical downlink control channel (PDCCH) candidate, and N is an integer greater than 1; and
receiving indication information, and determining from the N PDCCH candidates a reference PDCCH candidate for transmission in a case that the indication information indicates one set of transmission configuration indication (TCI) states.

In another aspect, a channel transmission method is provided, which is performed by an access network device, and the method includes:

transmitting first configuration information to a terminal, where the first configuration information is used to configure N search space sets having a link relationship, each of the N search space sets includes one physical downlink control channel (PDCCH) candidate, and N is an integer greater than 1; and
transmitting indication information to the terminal, and determining from the N PDCCH candidates a reference PDCCH candidate for transmission in a case that the indication information indicates one set of transmission configuration indication (TCI) states.

In another aspect, a channel transmission device is provided, which includes:

a reception module, configured to receive first configuration information, where the first configuration information is used to configure N search space sets having a link relationship, each of the N search space sets includes one physical downlink control channel (PDCCH) candidate, and N is an integer greater than 1;
where the reception module is further configured to: receive indication information, and determine from the N PDCCH candidates a reference PDCCH candidate for transmission in a case that the indication information indicates one set of transmission configuration indication (TCI) states.

In another aspect, a channel transmission device is provided, which includes:

a transmission module, configured to transmit first configuration information to a terminal, where the first configuration information is used to configure N search space sets having a link relationship, each of the N search space sets includes one physical downlink control channel (PDCCH) candidate, and N is an integer greater than 1;
where the transmission module is further configured to transmit indication information to the terminal, and determine from the N PDCCH candidates a reference PDCCH candidate for transmission in a case that the indication information indicates one set of transmission configuration indication (TCI) states.

In another aspect, a terminal is provided, which includes:

a processor;
a transceiver connected to the processor; and
a memory configured to store executable instructions for the processor; in which
the processor is configured to load and execute the executable instructions to perform the channel transmission method according to the above embodiments of the present disclosure.

In another aspect, an access network device is provided, which includes:

a processor;
a transceiver connected to the processor; and
a memory configured to store executable instructions for the processor;
the processor is configured to load and execute the executable instructions to perform the channel transmission method according to the above embodiments of the present disclosure.

On the other hand, a computer readable storage medium is provided, in which at least one instruction, at least one program, a code set or an instruction set is stored, and the at least one instruction, at least one program, the code set or the instruction set is loaded and executed by a processor to perform the channel transmission method according to the above embodiments of the present disclosure.

The beneficial effects of the technical solutions according to the embodiments of the present disclosure include at least the following.

In a case that the indication information indicates one set of TCI states, the multiple SS sets having the link relationship are configured for PDCCH reception, and the terminal uses the one set of TCI states to receive the PDCCH, an appropriate manner for determining the reference PDCCH candidate is adopted, so that the terminal and the base station maintain a consistent understanding on the adoption of the Reference PDCCH candidate, thereby improving the signal quality of Multi-TRP transmission based on unified TCI state.

## BRIEF DESCRIPTION OF THE DRAWINGS

To better clarify technical solutions of embodiments of the present disclosure, drawings used in descriptions of the embodiments are briefly introduced hereinafter. Apparently, the described drawings merely illustrate some embodiments of the present disclosure. A person ordinary skilled in the art can obtain other drawings based on these drawings without any creative efforts.

FIG. 1 is a block diagram of a communication system according to an exemplary embodiment of the present disclosure;

FIG. 2 is a flow chart of a channel transmission method according to an exemplary embodiment of the present disclosure;

FIG. 3 is a schematic diagram of a PDCCH channel according to an exemplary embodiment of the present disclosure;

FIG. 4 is a schematic diagram of a PDCCH channel according to another exemplary embodiment of the present disclosure;

FIG. 5 is a flow chart of a channel transmission method according to another exemplary embodiment of the present disclosure;

FIG. 6 is a flow chart of a channel transmission method according to another exemplary embodiment of the present disclosure;

FIG. 7 is a structural block diagram of a channel transmission device according to an exemplary embodiment of the present disclosure;

FIG. 8 is a structural block diagram of a channel transmission device according to another exemplary embodiment of the present disclosure; and
FIG. 9 is a structural block diagram of a communication device according to an exemplary embodiment of the present disclosure.

## DETAILED DESCRIPTION

In order to make the objects, technical solutions and advantages of the present disclosure clearer, the embodiments of the present disclosure will be further described in detail hereinafter with reference to the drawings.

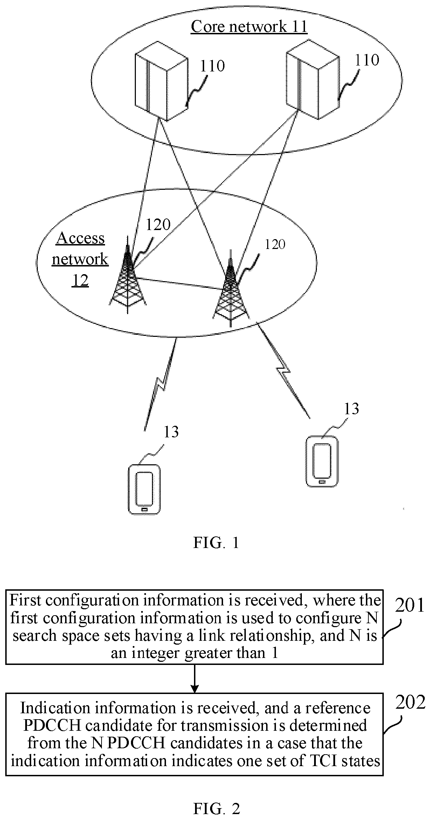

FIG. 1 shows a block diagram of a communication system according to an illustrative embodiment of the present disclosure. The communication system may include: a core network 11, an access network 12, and a terminal 13.

The core network 11 includes several core network devices 110. The core network devices 110 include an access and mobility management function (Access and Mobility Management Function, AMF), a session management function (Session Management Function, SMF), a user plane management function (User Plane Function, UPF) or other devices. Optionally, the core network 11 further includes a location management function (Location Management Function, LMF). The AMF is used to control access rights and functions (such as handover) of the terminal; the SMF is used to provide server continuity, and uninterrupted user experience of a server, such as IP address and anchor point change, etc.; the LMF is used to support positioning calculations and obtain a downlink positioning measurement result or positioning estimate from the terminal.

The access network 12 includes several access network devices 120. The access network device 120 may be a base station, and the base station is a device deployed in the access network to provide radio communication functions for terminals. The base station may have various forms, such as a macro base station, a micro base station, a relay station, an access point, a transmission reception point (Transmission Reception Point, TRP), etc. In systems using different radio access technologies, names of devices with base station functions may be different. For example, in a Long Term Evolution (Long Term Evolution, LTE) system, it is referred to as an eNodeB or eNB; in a 5G New Radio (New Radio, NR) system, it is referred to as a gNodeB or gNB. As the communication technologies evolve, the name "base station" may change. For the convenience of describing the embodiments of the present disclosure, the above devices that provide radio communication functions for terminals are collectively referred to as access network devices.

The terminal 13 may be any of various handheld devices, vehicle-mounted devices, wearable devices, computing devices, Internet of Things (Internet of Things, IoT) devices and Industrial Internet of Things (Industrial Internet of Things, IIoT) devices with radio communication functions, or other processing devices connected to a wireless modem, as well as various forms of user equipment (user equipment, UE), mobile stations (Mobile Station, MS), terminal devices, etc. For the convenience of description, the above devices are collectively referred to as terminal devices. The access network device 120 and the terminal device 13 communicate with each other via a certain air interface technology, such as a Uu interface.

The technical solutions of the embodiments of the present disclosure may be applied to various communication systems, such as: a Global System of Mobile Communication (Global System of Mobile Communication, GSM) system, a Code Division Multiple Access (Code Division Multiple Access, CDMA) system, a Wideband Code Division Multiple Access (Wideband Code Division Multiple Access, WCDMA) system, a General Packet Radio Service (General Packet Radio Service, GPRS) system, a Long Term Evolution (Long Term Evolution, LTE) system, an LTE Frequency Division Duplex (Frequency Division Duplex, FDD) system, an LTE Time Division Duplex (Time Division Duplex, TDD) system, an Advanced Long Term Evolution (Advanced Long Term Evolution, LTE-A) system, a New Radio (New Radio, NR) system, an evolution system of NR system, an LTE-based access to Unlicensed spectrum (LTE-based access to Unlicensed spectrum, LTE-U) system, an NR-U system, an Universal Mobile Telecommunication System (Universal Mobile Telecommunication System, UMTS), a Worldwide Interoperability for Microwave Access (Worldwide Interoperability for Microwave Access, WiMAX) communication system, a Wireless Local Area Networks (Wireless Local Area Networks, WLAN) system, a Wireless Fidelity (Wireless Fidelity, WiFi) system, a next generation communication system, or other communication systems, etc.

Generally speaking, conventional communication systems support a limited quantity of connections, which are easy to implement. However, with the development of communication technologies, mobile communication systems will not only support conventional communications, but will also support, for example, device to device (device to device, D2D) communication, machine to machine (machine to machine, M2M) communication, machine type communication (machine type communication, MTC), vehicle to vehicle (vehicle to vehicle, V2V) communication, and vehicle to everything (vehicle to everything, V2X) system, etc. The embodiments of the present disclosure may also be applied to these communication systems.

In 5G NR, in a case that a communication frequency band is in frequency range 2 (Frequency Rang, FR2), due to rapid attenuation of high-frequency channels, transmission/reception based on TCI state is required, so as to ensure coverage. The TCI state may include quasi co-location (Quasi co-location, QCL) type information. QCL Type A, B, and C are related to at least one of a doppler shift, a doppler spread, an average delay, or a delay spread, and QCL Type D is related to a spatial reception parameter (spatial Rx parameter).

In Rel-16, TCI states or pieces of spatial relation information of a physical downlink control channel (Physical Downlink Control Channel, PDCCH), a physical downlink shared channel (Physical Downlink Shared Channel, PDSCH), a physical uplink shared channel (Physical Uplink Shared Channel, PUSCH), a physical uplink control channel (Physical Uplink Control Channel, PUCCH) and/or various reference signals are independently indicated, where the reference signal includes a channel state information reference signal (Channel State Information Reference Signal, CSI-RS), a sounding reference signal (Sounding Reference Signal, SRS), a positioning reference signal (Positioning Reference Signal, PRS), or a timing reference signal (Timing Reference Signal, PRS), etc. The CSI-RS includes a CSI-RS for channel state information measurement, a CSI-RS for beam measurement, or a CSI-RS for pathloss estimation; the SRS includes an SRS for codebook-based or non-codebook-based channel state information measurement, an SRS for beam measurement, or an SRS for positioning measurement. Moreover, for PDCCH and PUCCH, a medium access control control element (Medium Access Control Control Element, MAC CE) is adopted to activate a TCI state or spatial relation information. For PDSCH and PUSCH, downlink control information (Downlink Control Information, DCI) signaling is adopted to indicate their respective TCI states or pieces of spatial relation information.

In Rel-17, in order to reduce signaling overhead, there is a desire to adopt unified TCI state. Unified TCI state may be indicated for uplink and downlink separately, or indicated for uplink and downlink jointly. That is, if a base station indicates a TCI state for downlink (DL), then this TCI state may be used for PDSCHs, some of PDCCHs (such as a UE dedicated PDCCH) and some of CSI-RSs, for a terminal; if the base station indicates a TCI state for uplink (UL), then this TCI state may be used for PUSCHs, some of PUCCHs and some of SRSs, of the terminal. If the base station indicates a joint TCI state (jointTCIstate), then this TCI state may be used for channels and/or reference signals of both uplink and downlink.

In Rel-17, only unified TCI state for a single TRP is considered, that is, only an indication method for one set of TCI states is considered (one set of TCI states includes one joint TCI state, or includes at least one of: one DL TCI state or one UL TCI state). However, it is unclear how to indicate in a case of M-TRP.

When considering M-TRP in Rel-18, in a scenario of adopting Single-DCI, in which one piece of DCI indicates PDCCH/PDSCH/PUSCH/PUCCH, etc., of multiple TRPs, one piece of DCI signaling can indicate multiple sets of unified TCI states. As the DCI sometimes indicates multiple sets of TCI states and sometimes indicates one set of TCI states, it is still unclear how to determine a TCI state for PDCCH reception and how to determine a reference PDCCH candidate.

In view of the above issues, embodiments of the present application provide a channel transmission method, which is mainly applied to determining a reference PDCCH candidate for transmission when there is only one set of TCI states in a case that reception of one PDCCH involves multiple PDCCH candidates and search space sets associated with the multiple PDCCH candidates have a link relationship.

FIG. 2 is a flow chart of a channel transmission method according to an exemplary embodiment of the present application. A case where the method is performed by a terminal is taken as an example. As shown in FIG. 2, the method includes the following steps.

Step 201: first configuration information is received, where the first configuration information is used to configure N search space sets having a link relationship, and N is an integer greater than 1.

Each of the search space sets (Search Space Set, SS set) includes one physical downlink control channel (PDCCH) candidate.

Optionally, the N PDCCH candidates are used for reception of one PDCCH.

Schematically, a case of two search space sets is taken as an example. Two SS sets having a link relationship are configured via radio resource control (Radio Resource Control, RRC) signaling, one of the two SS sets includes a first PDCCH candidate, and the other SS set includes a second PDCCH candidate, the two PDCCH candidates are used for reception of one PDCCH, each SS set is associated with its corresponding CORESET, and each CORESET is configured with one TCI state. The two SS sets may be the same or different; the two CORESETs may be the same or different. The TCI states of the two CORESETs may be the same or different. In a case that the TCI states of the two CORESETs are different, the two PDCCH candidates correspond to different TCI states.

Step 202: indication information is received, and a reference PDCCH candidate for transmission is determined from the N PDCCH candidates in a case that the indication information indicates one set of TCI states.

In some embodiments, the one set of TCI states is used for one target PDCCH candidate among the N PDCCH candidates, that is, the indication information is understood as being based on a non-repetition rule of PDCCH; in other embodiments, the one set of TCI states is used for multiple PDCCH candidates among the N PDCCH candidates, that is, the indication information is understood as being based on a repetition rule of PDCCH, which is not limited in the embodiments.

In an optional embodiment, after determining the reference PDCCH candidate, a transmission time domain parameter is determined based on the reference PDCCH candidate; or, a transmission frequency domain resource is determined based on the reference PDCCH candidate.

In an optional embodiment, the indication information includes first indication information, and the first indication information is used to indicate the one set of TCI states or multiple sets of TCI states, where the first indication information includes MAC CE signaling, or the first indication information includes MAC CE signaling and DCI.

Optionally, the indication information includes first indication information and second indication information, that is, the indication information further includes the second indication information, where the first indication information is used to indicate N sets of TCI states, and the first indication information includes MAC CE, or includes MAC CE and DCI. The second indication information is used to indicate, among the N sets of TCI states, one set of TCI states or M sets of TCI states for PDCCH reception, and the second indication information includes at least one of RRC signaling, MAC CE signaling or DCI. The value of M is the same as or different from the quantity of the PDCCH candidates, and M is an integer greater than 1.

Optionally, in a case that the indication information includes the first indication information and the second indication information: for other PDCCH, such as for reception of a PDCCH that does not correspond to the SS sets having the link relationship, or for transmission of a PDSCH, PUCCH, PUSCH, etc., the independent second indication information is needed, to indicate which set or sets of TCI states in the first indication information are to be used for transmission of the other PDCCH, or the PDSCH, PUCCH, PUSCH.

In an optional embodiment, the one set of TCI states includes one joint TCI state; or, the one set of TCI states includes one downlink TCI state (or referred to as downlink independent TCI state); or, the one set of TCI states includes one uplink TCI state (or referred to as uplink independent TCI state); or, the one set of TCI states includes one uplink TCI state and one downlink TCI state.

It is worth noting that, when used for transmission of a PDCCH or a PDSCH or a downlink signal, the one set of TCI states needs to include a joint TCI state or a downlink TCI state, and can not only include an uplink TCI state; when used for transmission of a PUCCH or a PUSCH or an uplink signal, the one set of TCI states needs to include a joint TCI state or an uplink TCI state, and can not only include a downlink TCI state.

In an optional embodiment, at least one set of TCI states indicated by the indication information is used for transmission of at least two types of channels and/or signals, including a PDCCH, and the signal includes at least one of a channel state information reference signal CSI-RS or a sounding reference signal SRS.

That is, each set of TCI states indicated by the indication information is TCI state(s) used for at least two types of channels and/or signals, which may be referred to as unified TCI state or indicated TCI state. An uplink channel includes a PUCCH or a PUSCH, a downlink channel includes a PDCCH or a PDSCH, an uplink signal includes a sounding reference signal SRS, and a downlink signal includes a channel state information reference signal CSI-RS.

Optionally, the terminal may receive the first configuration information first and then receive the indication information, or may receive the indication information first and then receive the first configuration information, or may receive the first configuration information and the indication information at the same time, which is not limited in the embodiments.

The following is an introduction to a method for corresponding one set of TCI states to PDCCH candidate(s), which includes: 1. one set of TCI states is used for one target PDCCH candidate; 2. one set of TCI states is used for multiple PDCCH candidates.

1. One set of TCI states is used for one target PDCCH candidate

One set of TCI states being used for one target PDCCH candidate means that: the one set of TCI states is used to receive a PDCCH on the target PDCCH candidate, and PDCCHs on other PDCCH candidates do not need to be monitored and received. In a case that the one set of TCI states is used for the one target PDCCH candidate, the target PDCCH candidate is determined as the reference PDCCH candidate. That is, if one set of TCI states only corresponds to one PDCCH candidate among the N PDCCH candidates, the PDCCH candidate corresponding to the one set of TCI states is determined as the reference PDCCH candidate.

When determining the target PDCCH candidate corresponding to the one set of TCI states, at least one of the following manners is included.

First manner: the base station informs the terminal of a correspondence relationship between PDCCH candidate and TCI state.

Optionally, the terminal receives second configuration information, where the second configuration information is used to indicate a correspondence relationship between each set of TCI states and a target PDCCH candidate.

Indicatively, the base station configures search space set groups corresponding to the search space sets; or the base station configures CORESET pool indices (CORESETPoolIndex) or CORESET pool groups (CORESET group) or channel groups (channel group) corresponding to control resource sets (Control Resource Set, CORESET), and the base station further indicates search space set groups or CORESET pool indices (CORESETPoolIndex) or CORESET pool groups (CORESET group) or channel groups (channel group) corresponding to each set of TCI states; then, the correspondence relationship between PDCCH candidate and TCI state is determined based on the correspondence relationship between the configuration by the base station and the information indicated by the base station. The configuration may be implemented via at least one of RRC, MAC CE or DCI. The indication may be implemented via at least one of RRC, MAC CE or DCI.

Second manner: determination is performed based on a default mapping rule.

Optionally, the terminal determines the target PDCCH candidate corresponding to the one set of TCI states from the N PDCCH candidates based on a default mapping relationship.

When determining the target PDCCH candidate based on the default mapping rule, at least one of the following manners is included.

1) The target PDCCH candidate is a PDCCH candidate corresponding to a smallest or smaller control resource set (CORESET) identity among the N PDCCH candidates.
That is, the target PDCCH candidate is a PDCCH candidate corresponding to a smallest or smaller CORESET ID among the N PDCCH candidates.
2) The target PDCCH candidate is a PDCCH candidate corresponding to a smallest or smaller search space set identity among the N PDCCH candidates.
That is, the target PDCCH candidate is a PDCCH candidate corresponding to a smallest or smaller SS set ID among the N PDCCH candidates.
3) The target PDCCH candidate is a PDCCH candidate corresponding to a CORESET with a smallest or smaller CORESET pool index (CORESETPoolIndex) among the N PDCCH candidates.
4) The target PDCCH candidate is a PDCCH candidate corresponding to a CORESET with a smallest or smaller CORESET group identity (CORESET group ID) among the N PDCCH candidates.

It is worth noting that the above method for determining the target PDCCH candidate is only an illustrative example, which is not limited in the embodiments of the present application.

2. One set of TCI states is used for multiple PDCCH candidates

One set of TCI states being used for multiple PDCCH candidates means that: the one set of TCI states is used to receive a same PDCCH on the multiple PDCCH candidates. In a case that the one set of TCI states is used for the multiple PDCCH candidates, the reference PDCCH candidate is determined from the multiple PDCCH candidates based on a configuration parameter relationship among the multiple PDCCH candidates.

Illustratively, the configuration parameter relationship refers to a comparison relationship among configuration parameters of the multiple PDCCH candidates. For example, the configuration parameter relationship includes at least one of the following relationships.

1. A sequential order of time domain resource start symbols corresponding to the multiple PDCCH candidates

For example, a PDCCH candidate with an earlier or earliest time domain resource start symbol is determined as the reference PDCCH candidate; or, a PDCCH candidate with a later or latest time domain resource start symbol is determined as the reference PDCCH candidate.

The PDCCH candidate with the earlier or earliest time domain resource start symbol being determined as the reference PDCCH candidate means: in a case that the quantity of the PDCCH candidates is 2, i.e., the value of N being 2, the PDCCH candidate with the earlier time domain resource start symbol is determined as the reference PDCCH candidate; in a case that the quantity of the PDCCH candidates is greater than 2, i.e., the value of N being greater than 2, the PDCCH candidate with the earliest time domain resource start symbol is determined as the reference PDCCH candidate.

Illustratively, in a case that the quantity of the PDCCH candidates is 2, a PDCCH candidate whose time domain resource start symbol is at the first position in time sequence is determined as the preference PDCCH candidate; in a case that the quantity of the PDCCH candidates is 4, a PDCCH candidate whose time domain resource start symbol is at the first position in time sequence is determined as the preference PDCCH candidate.

The PDCCH candidate with the later or latest time domain resource start symbol being determined as the reference PDCCH candidate means: in a case that the quantity of the PDCCH candidates is 2, i.e., the value of N being 2, the PDCCH candidate with the later time domain resource start symbol is determined as the reference PDCCH candidate; in a case that the quantity of the PDCCH candidates is greater than 2, i.e., the value of N being greater than 2, the PDCCH candidate with the latest time domain resource start symbol is determined as the reference PDCCH candidate.

Illustratively, in a case that the quantity of the PDCCH candidates is 2, a PDCCH candidate whose time domain resource start symbol is at the second position in time sequence is determined as the preference PDCCH candidate; in a case that the quantity of the PDCCH candidates is 4, a PDCCH candidate whose time domain resource start symbol is at the fourth position in time sequence is determined as the preference PDCCH candidate.

2. A sequential order of time domain resource end symbols corresponding to the multiple PDCCH candidates

For example, a PDCCH candidate with an earlier or earliest time domain resource end symbol is determined as the reference PDCCH candidate; or a PDCCH candidate with a later or latest time domain resource end symbol is determined as the reference PDCCH candidate.

The PDCCH candidate with the earlier or earliest time domain resource end symbol being determined as the reference PDCCH candidate means: in a case that the quantity of the PDCCH candidates is 2, i.e., the value of N being 2, the PDCCH candidate with the earlier time domain resource end symbol is determined as the reference PDCCH candidate; in a case that the quantity of the PDCCH candidates is greater than 2, i.e., the value of N being greater than 2, the PDCCH candidate with the earliest time domain resource end symbol is determined as the reference PDCCH candidate.

Illustratively, in a case that the quantity of the PDCCH candidates is 2, a PDCCH candidate whose time domain resource end symbol is at the first position in time sequence is determined as the preference PDCCH candidate; in a case that the quantity of the PDCCH candidates is 4, a PDCCH candidate whose time domain resource end symbol is at the first position in time sequence is determined as the preference PDCCH candidate.

The PDCCH candidate with the later or latest time domain resource end symbol being determined as the reference PDCCH candidate means: in a case that the quantity of the PDCCH candidates is 2, i.e., the value of N being 2, the PDCCH candidate with the later time domain resource end symbol is determined as the reference PDCCH candidate; in a case that the quantity of the PDCCH candidates is greater than 2, i.e., the value of N being greater than 2, the PDCCH candidate with the latest time domain resource end symbol is determined as the reference PDCCH candidate.

Illustratively, in a case that the quantity of the PDCCH candidates is 2, a PDCCH candidate whose time domain resource end symbol is at the second position in time sequence is determined as the preference PDCCH candidate; in a case that the quantity of the PDCCH candidates is 4, a PDCCH candidate whose time domain resource end symbol is at the fourth position in time sequence is determined as the preference PDCCH candidate.

3. A size relationship among CORESET identities corresponding to the multiple PDCCH candidates

For example, a PDCCH candidate with a largest or larger CORESET identity is determined as the reference PDCCH candidate; or, a PDCCH candidate with a smallest or smaller CORESET identity is determined as the reference PDCCH candidate.

The PDCCH candidate with the largest or larger CORESET identity being determined as the reference PDCCH candidate means: in a case that the quantity of the PDCCH candidates is 2, i.e., the value of N being 2, the PDCCH candidate with the larger CORESET identity is determined as the reference PDCCH candidate; in a case that the quantity of the PDCCH candidates is greater than 2, i.e., the value of N being greater than 2, the PDCCH candidate with the largest CORESET identity is determined as the reference PDCCH candidate.

Illustratively, in a case that the quantity of the PDCCH candidates is 2, a PDCCH candidate whose CORESET identity ranked second in the total arrangement order (arranged from small to large) is determined as the preference PDCCH candidate; in a case that the quantity of the PDCCH candidates is 4, a PDCCH candidate whose CORESET identity ranked fourth in the total arrangement order is determined as the preference PDCCH candidate.

The PDCCH candidate with the smallest or smaller CORESET identity being determined as the reference PDCCH candidate means: in a case that the quantity of the PDCCH candidates is 2, i.e., the value of N being 2, the PDCCH candidate with the smaller CORESET identity is determined as the reference PDCCH candidate; in a case that the quantity of the PDCCH candidates is greater than 2, i.e., the value of N being greater than 2, the PDCCH candidate with the smallest CORESET identity is determined as the reference PDCCH candidate.

Illustratively, in a case that the quantity of the PDCCH candidates is 2, the PDCCH candidate the a smaller CORESET identity is determined as the preference PDCCH candidate; in a case that the quantity of the PDCCH candidates is 4, the PDCCH candidate with the smallest CORESET identity is determined as the preference PDCCH candidate.

4. A size relationship among search space set identities corresponding to the multiple PDCCH candidates

For example, a PDCCH candidate with a largest or larger search space set identity is determined as the reference PDCCH candidate; or, a PDCCH candidate with a smallest or smaller search space set identity is determined as the reference PDCCH candidate.

The PDCCH candidate with the largest or larger search space set identity being determined as the reference PDCCH candidate means: in a case that the quantity of the PDCCH candidates is 2, i.e., the value of N being 2, a PDCCH candidate with a larger search space set identity is determined as the reference PDCCH candidate; in a case that the quantity of the PDCCH candidates is greater than 2, i.e., the value of N being greater than 2, a PDCCH candidate with the largest search space set identity is determined as the reference PDCCH candidate.

Illustratively, in a case that the quantity of the PDCCH candidates is 2, a PDCCH candidate whose search space set identity ranked second in the total arrangement order (arranged from small to large) is determined as the preference PDCCH candidate; in a case that the quantity of the PDCCH candidates is 4, a PDCCH candidate whose search space set identity ranked fourth in the total arrangement order is determined as the preference PDCCH candidate.

The PDCCH candidate with the smallest or smaller search space set identity being determined as the reference PDCCH candidate means: in a case that the quantity of the PDCCH candidates is 2, i.e., the value of N being 2, the PDCCH candidate with the smaller search space set identity is determined as the reference PDCCH candidate; in a case that the quantity of the PDCCH candidates is greater than 2, i.e., the value of N being greater than 2, the PDCCH candidate with the smallest search space set identity is determined as the reference PDCCH candidate.

Illustratively, in a case that the quantity of the PDCCH candidates is 2, the PDCCH candidate with the smaller search space set identity is determined as the preference PDCCH candidate; in a case that the quantity of the PDCCH candidates is 4, the PDCCH candidate with the smallest search space set identity is determined as the preference PDCCH candidate.

Optionally, in a case that one set of TCI states is used for multiple PDCCH candidates, after the reference PDCCH candidate is determined from the multiple PDCCH candidates, the reference PDCCH candidate may have multiple uses, such as: determination of a transmission time domain parameter, determination of a transmission frequency domain resource, etc. The transmission time domain parameter and the transmission frequency domain resource are explained separately.

1. Transmission time domain parameter

In Rel-15/16, many timing confirmations are determined based on a start symbol or end symbol of PDCCH reception. In Rel-17, since multiple PDCCH candidates are used to repeatedly transmit a same DCI, a Reference PDCCH candidate needs to be determined in Rel-17 in a case that two PDCCH candidates are in a time-division multiplexing (Time-Division Multiplexing, TDM) mode.

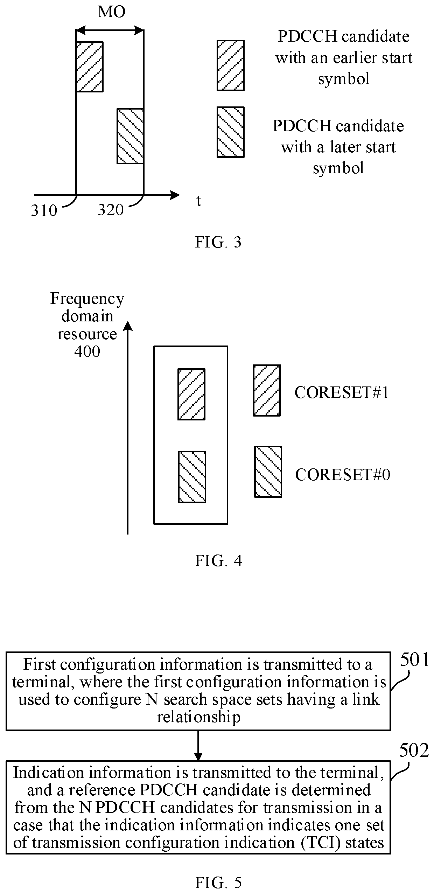

For example, for two PDCCH candidates for repeated transmission, a new monitoring occasion (Monitoring Occasion, MO) is defined in Rel-17, as shown in FIG. 3. Two PDCCH candidates are included in the MO, the start symbol of PDCCH reception is the start symbol position 310 corresponding to the PDCCH candidate with the earliest starting symbol, and the end symbol of PDCCH reception is the end symbol position 320 corresponding to the PD CCH candidate with the latest end symbol.

Therefore, in Rel-15/16, for a case where the end symbol of PDCCH reception is determined as a basis, the reference PDCCH candidate corresponds to the PDCCH candidate with the latest end symbol; for a case where the start symbol of PDCCH reception is determined as a basis, the reference PDCCH candidate corresponds to the PDCCH candidate with the earliest start symbol; there is also a special case in which the PDCCH candidate with the latest start symbol is determined as the reference PDCCH candidate, which will be introduced later. The usage scenarios of each reference PDCCH candidate are described in detail as follows.

1. Determining a PDCCH candidate with a later end symbol as the reference PDCCH candidate mainly includes the following usage scenarios.

1.1 For determining whether to use a default TCI state to receive a scheduling offset for PDSCH/CSI-RS.

1.2 For extending the definition of in-order transmission for PDCCH-PDSCH and PDCCH-PUSCH.

Illustratively, for any two Hybrid Automatic Repeat reQuest (HARQ) process identities in a scheduled cell, if a terminal is scheduled by a first PDCCH ending at symbol I to transmit a PDSCH/PUSCH starting at symbol j, then the terminal does not expect to be scheduled by a second PDCCH ending after symbol I to transmit a second PDSCH/PUSCH starting before symbol j.

1.3 For determining a preparation time N2 for PUSCH and a calculation time Z for CSI. The last symbol of the PDCCH is the last symbol based on the reference PDCCH candidate.

1.4 For determining a slot offset value N for HARQ ACK feedback for certain DL DCIs, and these DL DCIs do not include PDSCH scheduling, such as DCIs for Semi-Persistent Scheduling (SPS) release, DCIs for secondary cell dormancy indication, and DCIs requesting Type-3 HARQ-ACK.

1.5 For a cancellation timing (14 symbols) for SPS PDSCH.

1.6 For a timing (N3) for PUCCH resource rewriting.

1.7 For initiating a non-active timer duration (drx-InactivityTimer).

1.8 For a timing for Physical Random Access Channel (PRACH) transmission based on PDCCH scheduling.

1.9 For a reception preparation time for PDSCH/AP-CSI-RS, i.e., a minimum scheduling delays Npdsch and Ncsirs, in cross-carrier scheduling scenarios where a subcarrier spacing (SCS) of the PDCCH differs from that of the scheduled PDSCH/AP-CSI-RS.

1.10 For a timing condition for a virtual Power Headroom (PHR) relative to a actual PHR.

1.11 For determining an application window for a Transmit Power Command (TPC).

1.12 For determining an occupation duration of a CSI Processing Unit (CPU) for AP-CSI.

1.13 In TS 38.214, when DCI format 0_1 or 1_1 containing the "Minimum applicable scheduling offset indicator" field is received outside the first three symbols of a slot, and if $Z_\mu$ in Table 5.3.1-1 needs to be increased: for determining whether DCI format 0_1 or 1_1 is received outside the first three symbols of the slot.

1.14 For determining a set of symbols to be canceled as indicated by DCI format 2_4.

1.15 For a timing (Pswitch) for SS set group switching, when a DCI format that triggers the SS set group switching is detected.

1.16 For determining whether a TPC command is still within a TPC application time window, when DCI format 2_2/2_3 containing the TPC command is detected.

1.17 For a timing of a PDCCH span that carries bandwidth part (BWP) switching and CSI triggering, the span including the PDCCH candidate with a later end time is used as a reference.

1.18 When a DCI releasing SPS PDSCH is received in the same slot as the SPS PDSCH, the PDCCH candidate with a later end time needs to end before the SPS PDSCH.

1.19 For determining the activation of Non-Zero-Power (NZP) CSI-RS resources/ports and the CPU occupation duration for the first SP-CSI on PUSCH.

1.20 In Beam-Failure-Recovery (BFR), when PDCCH candidates carrying BFR response are two PDCCH candidates having a link relationship, the beam/power control update time is 28 symbols after the last symbol of the PDCCH candidate with a later end time.

1.21 As a constraint, when two PDCCH candidates having a link relationship are used to schedule PDSCH Type A, the two PDCCH candidates need to be included within the first three symbols of the slot.

2. Determining a PDCCH candidate with an earlier start symbol as the reference PDCCH candidate mainly includes the following usage scenarios.

2.1 T For determining the most recently transmitted SRS resource based on the SRS Resource Index (SRI).

2.2 When multiple PDCCH candidates are not within the same PDCCH MO, the PDCCH candidate with an earlier start time is used as the reference PDCCH candidate:

    i. for determining the counter DAI/total DAI and Type-2 HARQ-ack codebook structure;
    ii. for determining the last DCI used for PUCCH resource determination based on the PUCCH Resource Index (PRI) indication field of the last DCI.

2.3 For determining the set of interrupted symbols based on DCI format 2_1 (Pre-emption indication).

2.4 For determining the first symbol of PDCCH reception for cancellation indication for PUSCH/SRS based on DCI format 2_4.

2.5 When PDCCH candidates carrying downlink feedback information (DFI) are two PDCCH candidates having a link relationship, the PDCCH candidate with an earlier start time is used as a reference to determine the validity of the DFI of the PUSCH corresponding to the specified HARQ process number.

3. Determining a PDCCH candidate with a later start symbol as a reference PDCCH candidate mainly includes one scenario: for the addressing mapping method of PDSCH Type B, for a reference symbol used to indicate the earliest time that PDSCH can be scheduled and the start and length indicator SLIV (when the terminal is configured with ReferenceofSLIV - For DCI Format 1_2, and $K_0$=0), a reference PDCCH candidate needs to be used. That is, the transmission time of Type B PDSCH cannot be earlier than the start time of the PDCCH candidate with a later start time.

2. Transmission frequency domain resource

In a case that CORESETs corresponding to two PDCCH candidates are in a frequency division multiplexing (FDM) mode: since frequency domain resources of the two CORESETs are different, as shown in FIG. 4, and in Rel-15/16, there is a situation where the frequency domain resources of PUCCH/PUSCH/PDSCH need to be determined based on the frequency domain resources 400 of CORESET, so in Rel-17, it is needed to determine which CORESET of the two CORESETs is the reference CORESET.

At least one of the following situations is included.

1. PUCCH resource determination

When the PUCCH resource set size is greater than 8, the PUCCH resource for transmitting the HARQ-ACK corresponding to the resource scheduled by the PDCCH is determined.

In the related technologies, a PUCCH resource is determined based on the quantity of resource elements (Control Channel Element, CCE) of the CORESET corresponding to the PDCCH and the index value of the start CCE of the PDCCH candidate. When the PDCCH corresponds to two CORESETs and/or two SS sets, the CORESET corresponding to the SS set with a smaller or smallest SS set ID is selected.

2. Frequency Domain Resource Determination of PUSCH Resource and PDSCH Resource

The frequency domain resource of PDSCH is determined as follows.

For the PDSCH scheduled by DCI format 1_0 transmitted in the common SS, it is described as "for non-interleaved VRB to PRB, VRB n corresponds to PRB

$$\mathrm{n}+ N_{start}^{CORESET}$$ ", $N_{start}^{CORESET}$ is the lowest indexed PRB of the CORESET corresponding to the corresponding DCI. When the corresponding DCI is carried by two PDCCH candidates having a link relationship, the lowest indexed PRB of the CORESET with the smaller CORESET ID is used as $N_{start}^{CORESET}$.

The frequency domain resource of PUSCH is determined as follows.

Same as PDSCH, for PUSCH scheduled with DCI format 0_0 (CRC is RNTI scrambled, instead of TC-RNTI scrambled), in a case that the resource allocation type is type 2, it is described as "the uplink RB set is the lowest indexed one amongst uplink RB set(s) that intersects the lowest-indexed CCE of the PDCCH in which the UE detects the DCI 0_0 in the active downlink BWP". When the corresponding DCI is carried by two PDCCH candidates having a link relationship, the lowest indexed CCE corresponding to the PDCCH candidate of the CORESET with the smaller CORESET ID is used as a reference.

In conclusion, based on the channel transmission method according to the embodiments of the present application, in a case that the indication information indicates one set of TCI states, the multiple SS sets having the link relationship are configured for PDCCH reception, and the terminal uses the one set of TCI states to receive the PDCCH, an appropriate manner for determining the reference PDCCH candidate is adopted, so that the terminal and the base station maintain a consistent understanding on the adoption of the Reference PDCCH candidate, thereby improving the signal quality of Multi-TRP transmission based on unified TCI state.

FIG. 5 is a flow chart of a channel transmission method according to another exemplary embodiment of the present application. A case where the method is performed by an access network device is taken as an example. As shown in FIG. 5, the method includes the following steps.

Step 501: first configuration information is transmitted to a terminal, where the first configuration information is used to configure N search space sets having a link relationship.

Each of the SS sets includes one physical downlink control channel (PDCCH) candidate.

Optionally, the N PDCCH candidates are used for reception of one PDCCH.

Schematically, a case of two search space sets is taken as an example. Two SS sets having a link relationship are configured via radio resource control (Radio Resource Control, RRC) signaling, one of the two SS sets includes a first PDCCH candidate, and the other SS set includes a second PDCCH candidate, the two PDCCH candidates are used for reception of one PDCCH, each SS set is associated with its corresponding CORESET, and each CORESET is configured with one TCI state. The two SS sets may be the same or different; the two CORESETs may be the same or different. The TCI states of the two CORESETs may be the same or different. In a case that the TCI states of the two CORESETs are different, the two PDCCH candidates correspond to different TCI states.

Step 502: indication information is transmitted to the terminal, and a reference PDCCH candidate is determined from the N PDCCH candidates for transmission in a case that the indication information indicates one set of transmission configuration indication (TCI) states.

In some embodiments, the one set of TCI states is used for one target PDCCH candidate among the N PDCCH candidates, that is, the indication information is understood as being based on a non-repetition rule of PDCCH; in other embodiments, the one set of TCI states is used for multiple PDCCH candidates among the N PDCCH candidates, that is, the indication information is understood as being based on a repetition rule of PDCCH, which is not limited in the embodiments.

In an optional embodiment, after determining the reference PDCCH candidate, a transmission time domain parameter is determined based on the reference PDCCH candidate; or, a transmission frequency domain resource is determined based on the reference PDCCH candidate.

In an optional embodiment, the indication information includes first indication information, and the first indication information is used to indicate the one set of TCI states or multiple sets of TCI states, where the first indication information includes MAC CE signaling, or the first indication information includes MAC CE signaling and DCI.

Optionally, the indication information includes first indication information and second indication information, that is, the indication information further includes the second indication information, where the first indication information is used to indicate N sets of TCI states, and the first indication information includes MAC CE, or includes MAC CE and DCI. The second indication information is used to indicate, among the N sets of TCI states, one set of TCI states or M sets of TCI states for PDCCH reception, and the second indication information includes at least one of RRC signaling, MAC CE signaling or DCI. The value of M is the same as or different from the quantity of the PDCCH candidates, and M is an integer greater than 1.

Optionally, in a case that the indication information includes the first indication information and the second indication information: for other PDCCH, such as for reception of a PDCCH that does not correspond to the SS sets having the link relationship, or for transmission of a PDSCH, PUCCH, PUSCH, etc., the independent second indication information is needed, to indicate which set or sets of TCI states in the first indication information are to be used for transmission of the other PDCCH, or the PDSCH, PUCCH, PUSCH.

In an optional embodiment, the one set of TCI states includes one joint TCI state; or, the one set of TCI states includes one downlink TCI state (or referred to as downlink independent TCI state); or, the one set of TCI states includes one uplink TCI state (or referred to as uplink independent TCI state); or, the one set of TCI states includes one uplink TCI state and one downlink TCI state.

It is worth noting that, when used for transmission of a PDCCH or a PDSCH or a downlink signal, the one set of TCI states needs to include a joint TCI state or a downlink TCI state, and can not only include an uplink TCI state; when used for transmission of a PUCCH or a PUSCH or an uplink signal, the one set of TCI states needs to include a joint TCI state or an uplink TCI state, and can not only include a downlink TCI state.

In an optional embodiment, at least one set of TCI states indicated by the indication information is used for transmission of at least two types of channels and/or signals, including a PDCCH, and the signal includes at least one of a channel state information reference signal CSI-RS or a sounding reference signal SRS.

That is, each set of TCI states indicated by the indication information is TCI state(s) used for at least two types of channels and/or signals, which may be referred to as unified TCI state or indicated TCI state. An uplink channel includes a PUCCH or a PUSCH, a downlink channel includes a PDCCH or a PDSCH, an uplink signal includes a sounding reference signal SRS, and a downlink signal includes a channel state information reference signal CSI-RS.

In conclusion, based on the channel transmission method according to the embodiments of the present application, in a case that the indication information indicates one set of TCI states, the multiple SS sets having the link relationship are configured for PDCCH reception, and the terminal uses the one set of TCI states to receive the PDCCH, an appropriate manner for determining the reference PDCCH candidate is adopted, so that the terminal and the base station maintain a consistent understanding on the adoption of the Reference PDCCH candidate, thereby improving the signal quality of Multi-TRP transmission based on unified TCI state.

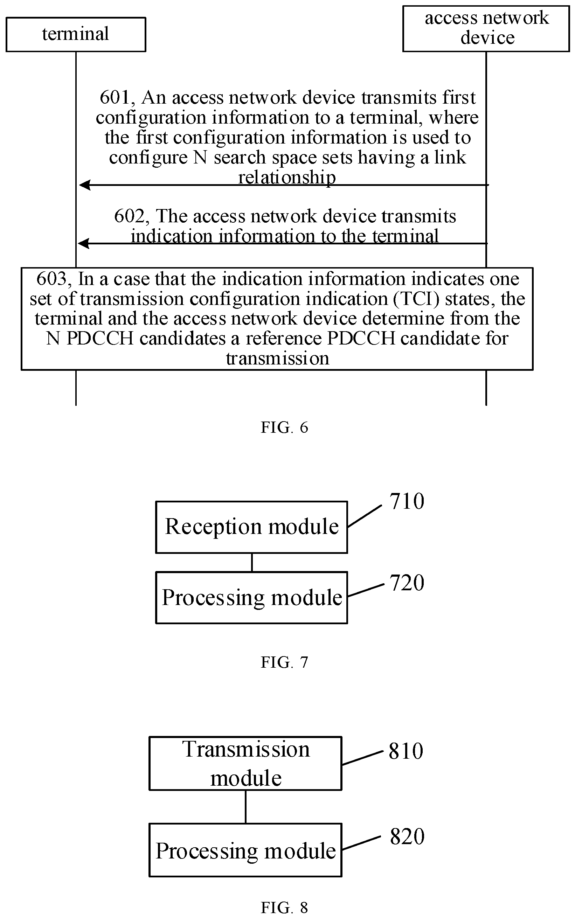

FIG. 6 is a flow chart of a channel transmission method according to another exemplary embodiment of the present application. A case where the method is applied between a terminal and an access network device is taken as an example. As shown in FIG. 6, the method includes the following steps.

Step 601: an access network device transmits first configuration information to a terminal, where the first configuration information is used to configure N search space sets having a link relationship.

Each of the SS sets includes one physical downlink control channel PDCCH candidate.

Optionally, the N PDCCH candidates are used for reception of one PDCCH.

Schematically, a case of two search space sets is taken as an example. Two SS sets having a link relationship are configured via radio resource control (Radio Resource Control, RRC) signaling, one of the two SS sets includes a first PDCCH candidate, and the other SS set includes a second PDCCH candidate, the two PDCCH candidates are used for reception of one PDCCH, each SS set is associated with its corresponding CORESET, and each CORESET is configured with one TCI state. The two SS sets may be the same or different; the two CORESETs may be the same or different. The TCI states of the two CORESETs may be the same or different. In a case that the TCI states of the two CORESETs are different, the two PDCCH candidates correspond to different TCI states.

Step 602: the access network device transmits indication information to the terminal.

In an optional embodiment, the indication information includes first indication information, and the first indication information is used to indicate the one set of TCI states or multiple sets of TCI states, where the first indication information includes MAC CE signaling, or the first indication information includes MAC CE signaling and DCI.

Optionally, the indication information includes first indication information and second indication information, that is, the indication information further includes the second indication information, where the first indication information is used to indicate N sets of TCI states, and the first indication information includes MAC CE, or includes MAC CE and DCI. The second indication information is used to indicate, among the N sets of TCI states, one set of TCI states or M sets of TCI states for PDCCH reception, and the second indication information includes at least one of RRC signaling, MAC CE signaling or DCI. The value of M is the same as or different from the quantity of the PDCCH candidates, and M is an integer greater than 1.

Optionally, in a case that the indication information includes the first indication information and the second indication information: for other PDCCH, such as for reception of a PDCCH that does not correspond to the SS sets having the link relationship, or for transmission of a PDSCH, PUCCH, PUSCH, etc., the independent second indication information is needed, to indicate which set or sets of TCI states in the first indication information are to be used for transmission of the other PDCCH, or the PDSCH, PUCCH, PUSCH.

In an optional embodiment, the one set of TCI states includes one joint TCI state; or, the one set of TCI states includes one downlink TCI state (or referred to as downlink independent TCI state); or, the one set of TCI states includes one uplink TCI state (or referred to as uplink independent TCI state); or, the one set of TCI states includes one uplink TCI state and one downlink TCI state.

It is worth noting that, when used for transmission of a PDCCH or a PDSCH or a downlink signal, the one set of TCI states needs to include a joint TCI state or a downlink TCI state, and can not only include an uplink TCI state; when used for transmission of a PUCCH or a PUSCH or an uplink signal, the one set of TCI states needs to include a joint TCI state or an uplink TCI state, and can not only include a downlink TCI state.

Optionally, for the PDCCH candidate in the embodiments of the present application, one set of TCI states includes one joint TCI state; or, one set of TCI states includes one downlink TCI state (or called downlink independent TCI state); or, one set of TCI states includes one uplink TCI state and one downlink TCI state.

In an optional embodiment, at least one set of TCI states indicated by the indication information is used for transmission of at least two types of channels and/or signals, including a PDCCH, and the signal includes at least one of a channel state information reference signal CSI-RS or a sounding reference signal SRS.

That is, each set of TCI states indicated by the indication information is TCI state(s) used for at least two types of channels and/or signals, which may be referred to as unified TCI state or indicated TCI state. An uplink channel includes a PUCCH or a PUSCH, a downlink channel includes a PDCCH or a PDSCH, an uplink signal includes a sounding reference signal SRS, and a downlink signal includes a channel state information reference signal CSI-RS.

Step 603: in a case that the indication information indicates one set of transmission configuration indication (TCI) states, the terminal and the access network device determine from the N PDCCH candidates a reference PDCCH candidate for transmission.

In a case that the indication information indicates one set of transmission configuration indication (TCI) states, the terminal determines from the N PDCCH candidates the reference PDCCH candidate for receiving; in a case that the indication information indicates one set of transmission configuration indication (TCI) states, the access network device determines from the N PDCCH candidates the reference PDCCH candidate for transmitting.

In some embodiments, the one set of TCI states is used for one target PDCCH candidate among the N PDCCH candidates, that is, the indication information is understood as being based on a non-repetition rule of PDCCH; in other embodiments, the one set of TCI states is used for multiple PDCCH candidates among the N PDCCH candidates, that is, the indication information is understood as being based on a repetition rule of PDCCH, which is not limited in the embodiments.

In an optional embodiment, after determining the reference PDCCH candidate, a transmission time domain parameter is determined based on the reference PDCCH candidate; or, a transmission frequency domain resource is determined based on the reference PDCCH candidate.

In conclusion, based on the channel transmission method according to the embodiments of the present application, in a case that the indication information indicates one set of TCI states, the multiple SS sets having the link relationship are configured for PDCCH reception, and the terminal uses the one set of TCI states to receive the PDCCH, an appropriate manner for determining the reference PDCCH candidate is adopted, so that the terminal and the base station maintain a consistent understanding on the adoption of the Reference PDCCH candidate, thereby improving the signal quality of Multi-TRP transmission based on unified TCI state.

FIG. 7 is a structural block diagram of a channel transmission device according to an exemplary embodiment of the present application. As shown in FIG. 7, the device includes a reception module 710.

The reception module 710 is configured to receive first configuration information, where the first configuration information is used to configure N search space sets having a link relationship, each of the N search space sets includes one physical downlink control channel (PDCCH) candidate, and N is an integer greater than 1.

The reception module 710 is further configured to receive indication information, and determine from the N PDCCH candidates a reference PDCCH candidate for transmission in a case that the indication information indicates one set of transmission configuration indication (TCI) states.

In an optional embodiment, the N PDCCH candidates are used for reception of one PDCCH.

In an optional embodiment, the one set of TCI states is used for one target PDCCH candidate among the N PDCCH candidates; or

the one set of TCI states is used for multiple PDCCH candidates among the N PDCCH candidates.

In an optional embodiment, the device further includes a processing module 720.

The processing module 720 is configured to determine the target PDCCH candidate as the reference PDCCH candidate, in a case that the one set of TCI states is used for the one target PDCCH candidate.

In an optional embodiment, the reception module 710 is further configured to receive second configuration information, where the second configuration information is used to indicate a correspondence relationship between the one set of TCI states and the target PDCCH candidate; or,

the processing module 720 is further configured to determine the target PDCCH candidate corresponding to the one set of TCI states from the N PDCCH candidates based on a default mapping relationship.

In an optional embodiment, the target PDCCH candidate is a PDCCH candidate corresponding to a smallest or smaller control resource set (CORESET) identity among the N PDCCH candidates; or,

the target PDCCH candidate is a PDCCH candidate corresponding to a smallest or smaller search space set identity among the N PDCCH candidates; or, the target PDCCH candidate is a PDCCH candidate corresponding to a CORESET with a smallest or smaller CORESET pool index (CORESETPoolIndex) among the N PDCCH candidates; or, the target PDCCH candidate is a PDCCH candidate corresponding to a CORESET with a smallest or smaller CORESET group identity (CORESET group ID) among the N PDCCH candidates.

In an optional embodiment, the device further includes:
a processing module 720, configured to determine the reference PDCCH candidate from the multiple PDCCH candidates based on a configuration parameter relationship among the multiple PDCCH candidates, in a case that the one set of TCI states is used for the multiple PDCCH candidates.

In an optional embodiment, the configuration parameter relationship includes at least one of:

a sequential order of time domain resource start symbols corresponding to the multiple PDCCH candidates;
a sequential order of time domain resource end symbols corresponding to the multiple PDCCH candidates;
a size relationship among CORESET identities corresponding to the multiple PDCCH candidates; or,
a size relationship among search space set identities corresponding to the multiple PDCCH candidates.

In an optional embodiment, the processing module 720 is further configured to determine a PDCCH candidate with an earlier or earliest time domain resource start symbol as the reference PDCCH candidate; or,

the processing module 720 is further configured to determine a PDCCH candidate with a later or latest time domain resource start symbol as the reference PDCCH candidate; or,
the processing module 720 is further configured to determine a PDCCH candidate with an earlier or earliest time domain resource end symbol as the reference PDCCH candidate; or,
the processing module 720 is further configured to determine a PDCCH candidate with a later or latest time domain resource end symbol as the reference PDCCH candidate; or,
the processing module 720 is further configured to determine a PDCCH candidate with a largest or larger CORESET identity as the reference PDCCH candidate; or,
the processing module 720 is further configured to determine a PDCCH candidate with a smallest or smaller CORESET identity as the reference PDCCH candidate; or,
the processing module 720 is further configured to determine a PDCCH candidate with a largest or larger search space set identity as the reference PDCCH candidate; or,
the processing module 720 is further configured to determine a PDCCH candidate with a smallest or smaller search space set identity as the reference PDCCH candidate.

In an optional embodiment, the device further includes:

a processing module 720, configured to determine a transmission time domain parameter based on the reference PDCCH candidate; or,
a processing module 720, configured to determine a transmission frequency domain resource based on the reference PDCCH candidate.

In an optional embodiment, the indication information includes first indication information, and the first indication information is used to indicate the one set of TCI states or multiple sets of TCI states.

The first indication information includes medium access control control element (MAC CE) signaling, or, the first indication information includes MAC CE signaling and downlink control information (DCI).

In an optional embodiment, the indication information further includes second indication information, the first indication information is used to indicate N sets of TCI states, and the second indication information is used to indicate, among the N sets of TCI states, one or more sets of TCI states for PDCCH reception.

The second indication information includes at least one of radio resource control (RRC) signaling, MAC CE signaling or DCI.

In an optional embodiment, the one set of TCI states includes one joint TCI state; or

the one set of TCI states includes one downlink TCI state; or
the one set of TCI states includes one uplink TCI state; or
the one set of TCI states includes one uplink TCI state and one downlink TCI state.

In an optional embodiment, the one set of TCI states indicated by the indication information is used for transmission of at least two types of channels and/or signals, including a PDCCH, and the signal includes at least one of a channel state information reference signal (CSI-RS) or a sounding reference signal (SRS).

FIG. 8 is a structural block diagram of a channel transmission device according to an exemplary embodiment of the present application. As shown in FIG. 8, the device includes a transmission module 810.

The transmission module 810 is configured to transmit first configuration information to a terminal, where the first configuration information is used to configure N search space sets having a link relationship, each of the N search space sets includes one physical downlink control channel (PDCCH) candidate, and N is an integer greater than 1.

The transmission module 810 is further configured to transmit indication information to the terminal, and determining from the N PDCCH candidates a reference PDCCH candidate for transmission in a case that the indication information indicates one set of transmission configuration indication (TCI) states.

In an optional embodiment, the N PDCCH candidates are used for transmission of one PDCCH.

In an optional embodiment, the one set of TCI states is used for one target PDCCH candidate among the N PDCCH candidates; or

the one set of TCI states is used for multiple PDCCH candidates among the N PDCCH candidates.

In an optional embodiment, the device further includes a processing module 820.

The processing module 820 is configured to determine the target PDCCH candidate as the reference PDCCH candidate, in a case that the one set of TCI states is used for the one target PDCCH candidate.

In an optional embodiment, the transmission module 810 is further configured to transmit second configuration information to the terminal, where the second configuration information is used to indicate a correspondence relationship between the one set of TCI states and the target PDCCH candidate; or,

the processing module 820 is further configured to determine the target PDCCH candidate corresponding to the one set of TCI states from the N PDCCH candidates based on a default mapping relationship.

In an optional embodiment, the target PDCCH candidate is a PDCCH candidate corresponding to a smallest or smaller CORESET identity among the N PDCCH candidates; or,

the target PDCCH candidate is a PDCCH candidate corresponding to a smallest or smaller search space set identity among the N PDCCH candidates; or,
the target PDCCH candidate is a PDCCH candidate corresponding to a CORESET with a smallest or smaller CORESET pool index (CORESETPoolIndex) among the N PDCCH candidates; or,
the target PDCCH candidate is a PDCCH candidate corresponding to a CORESET with a smallest or smaller CORESET group identity among the N PDCCH candidates.

In an optional embodiment, the device further includes a processing module 820.

The processing module 820 is configured to determine the reference PDCCH candidate from the multiple PDCCH candidates based on a configuration parameter relationship among the multiple PDCCH candidates, in a case that the one set of TCI states is used for the multiple PDCCH candidates.

In an optional embodiment, the configuration parameter relationship includes at least one of:

a sequential order of time domain resource start symbols corresponding to the multiple PDCCH candidates;
a sequential order of time domain resource end symbols corresponding to the multiple PDCCH candidates;
a size relationship among CORESET identities corresponding to the multiple PDCCH candidates; or,
a size relationship among search space set identities corresponding to the multiple PDCCH candidates.

In an optional embodiment, the processing module 820 is further configured to determine a PDCCH candidate with an earlier or earliest time domain resource start symbol as the reference PDCCH candidate; or,

the processing module 820 is further configured to determine a PDCCH candidate with a later or latest time domain resource start symbol as the reference PD CCH candidate; or,

the processing module 820 is further configured to determine a PDCCH candidate with an earlier or earliest time domain resource end symbol as the reference PDCCH candidate; or,

the processing module 820 is further configured to determine a PDCCH candidate with a later or latest time domain resource end symbol as the reference PDCCH candidate; or,

the processing module 820 is further configured to determine a PDCCH candidate with a largest or larger CORESET identity as the reference PDCCH candidate; or,

the processing module 820 is further configured to determine a PDCCH candidate with a smallest or smaller CORESET identity as the reference PDCCH candidate; or,

the processing module 820 is further configured to determine a PDCCH candidate with a largest or larger search space set identity as the reference PDCCH candidate; or,

the processing module 820 is further configured to determine a PDCCH candidate with a smallest or smaller search space set identity as the reference PDCCH candidate.

In an optional embodiment, the indication information includes first indication information, and the first indication information is used to indicate the one set of TCI states or multiple sets of TCI states.

The first indication information includes medium access control control element (MAC CE) signaling, or, the first indication information includes MAC CE signaling and downlink control information (DCI).

In an optional embodiment, the indication information further includes second indication information, the first indication information is used to indicate N sets of TCI states, and the second indication information is used to indicate, among the N sets of TCI states, one or more sets of TCI states for PDCCH reception。

The second indication information includes at least one of radio resource control (RRC) signaling, MAC CE signaling or DCI.

In an optional embodiment, the one set of TCI states includes one joint TCI state; or

the one set of TCI states includes one downlink TCI state; or
the one set of TCI states includes one uplink TCI state; or
the one set of TCI states includes one uplink TCI state and one downlink TCI state.

In an optional embodiment, the one set of TCI states indicated by the indication information is used for transmission of at least two types of channels and/or signals, including a PDCCH, and the signal includes at least one of a CSI-RS or an SRS.

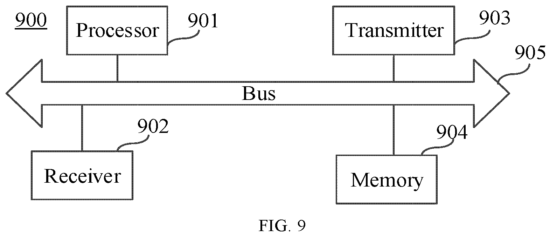

FIG. 9 shows a structural diagram of a communication device 900 (terminal device or network device) according to an exemplary embodiment of the present disclosure. The communication device 900 includes: a processor 901, a receiver 902, a transmitter 903, a memory 904 and a bus 905.

The processor 901 includes one or more processing cores. The processor 901 performs various functional applications and information processing by executing software programs and modules.

The receiver 902 and the transmitter 903 may be implemented as a communication component, and the communication component may be a communication chip.

The memory 904 is connected to the processor 901 via a bus 905.

The memory 904 may be configured to store at least one instruction, and the processor 901 is configured to execute the at least one instruction to perform the various step in the above method embodiments.

In addition, the memory 904 may be implemented by any type of volatile or non-volatile storage device or a combination thereof. The volatile or non-volatile storage device includes but is not limited to: a magnetic disk, an optical disk, an electrically erasable programmable read only memory (Electrically Erasable Programmable Read Only Memory, EEPROM), an erasable programmable read only memory (Erasable Programmable Read Only Memory, EPROM), a static random access memory (Static Random Access Memory, SRAM), a read-only memory (Read-Only Memory, ROM), a magnetic memory, a flash memory, and a programmable read-only memory (Programmable Read-Only Memory, PROM).

An exemplary embodiment of the present disclosure further provides a channel transmission system, and the system includes: a terminal device and an access network device.

The terminal device includes the channel transmission device according to the embodiments shown in FIG. 7;

The access network device includes the channel transmission device according to the embodiments shown in FIG. 8.

An exemplary embodiment of the present disclosure further provides a computer readable storage medium, in which at least one instruction, at least one program, a code set or an instruction set is stored. The at least one instruction, the at least one program, the code set or the instruction set is loaded and executed by a processor to perform the steps performed by the terminal in the channel transmission method or the steps performed by the network device in the channel transmission method according to the above method embodiments.

It should be understood that the expression "multiple" mentioned herein refers to two or more than two. The expression "and/or" is used to describe an association relationship of associated objects, indicating that three relationships may exist. For example, A and/or B may represent that: A exists alone, A and B exist at the same time, and B exists alone. The character "/" generally indicates that there is an "or" relationship between an associated object before it and an associated object after it.

Other embodiments of the disclosure will be apparent to those skilled in the art from consideration of the specification and practice of the invention disclosed herein. The present disclosure is intended to cover any modifications, uses or adaptations of the present disclosure, and the modifications, uses or adaptations follow the general principles of the present disclosure and include common knowledge or customary technical means in the technical field not disclosed in the present disclosure. It is intended that the specification and examples be considered as exemplary only, with a true scope and spirit of the present disclosure being indicated by the claims.

It should be understood that the present disclosure is not limited to the exact structures described above and shown in the drawings, and that various modifications and changes may be made without departing from the scope thereof. The scope of the present disclosure is limited only by the claims.

**Claims**

1. A channel transmission method, performed by a terminal, comprising:

   receiving first configuration information, wherein the first configuration information is used to configure N search space sets having a link relationship, each of the N search space sets comprises one physical downlink control channel (PDCCH) candidate, and N is an integer greater than 1; and
   receiving indication information, and determining from the N PDCCH candidates a reference PDCCH candidate for transmission in a case that the indication information indicates one set of transmission configuration indication (TCI) states.

2. The channel transmission method according to claim 1, wherein the N PDCCH candidates are used for reception of one PDCCH;

   wherein the one set of TCI states is used for one target PDCCH candidate among the N PDCCH candidates; or
the one set of TCI states is used for a plurality of PDCCH candidates among the N PDCCH candidates.

3. The channel transmission method according to claim 2, further comprising:
   determining the target PDCCH candidate as the reference PDCCH candidate, in a case that the one set of TCI states is used for the one target PDCCH candidate.

4. The channel transmission method according to claim 3, further comprising:

   receiving second configuration information, wherein the second configuration information is used to indicate a correspondence relationship between the one set of TCI states and the target PDCCH candidate; or
   determining the target PDCCH candidate corresponding to the one set of TCI states from the N PDCCH candidates based on a default mapping relationship.

5. The channel transmission method according to claim 4, wherein:

   the target PDCCH candidate is a PDCCH candidate corresponding to a smallest control resource set (CORESET) identity among the N PDCCH candidates;
   the target PDCCH candidate is a PDCCH candidate corresponding to a smallest search space set identity among the N PDCCH candidates;
   the target PDCCH candidate is a PDCCH candidate corresponding to a CORESET with a smallest CORESET pool index (CORESETPoolIndex) among the N PDCCH candidates; or
   the target PDCCH candidate is a PDCCH candidate corresponding to a CORESET with a smallest CORESET group identity (CORESET group ID) among the N PDCCH candidates.

6. The channel transmission method according to claim 2, further comprising:
   determining the reference PDCCH candidate from the plurality of PDCCH candidates based on a configuration parameter relationship among the plurality of PDCCH candidates, in a case that the one set of TCI states is used for the plurality of PDCCH candidates.

7. The channel transmission method according to claim 6, wherein the configuration parameter relationship comprises at least one of:

a sequential order of time domain resource start symbols corresponding to the plurality of PDCCH candidates;

a sequential order of time domain resource end symbols corresponding to the plurality of PDCCH candidates;

a size relationship among CORESET identities corresponding to the plurality of PDCCH candidates; or

a size relationship among search space set identities corresponding to the plurality of PDCCH candidates.

8. The channel transmission method according to claim 7, further comprising:

determining a PDCCH candidate with an earlier or earliest time domain resource start symbol as the reference PDCCH candidate;

determining a PDCCH candidate with a later or latest time domain resource start symbol as the reference PDCCH candidate;

determining a PDCCH candidate with an earlier or earliest time domain resource end symbol as the reference PDCCH candidate; or

determining a PDCCH candidate with a later or latest time domain resource end symbol as the reference PDCCH candidate.

9. The channel transmission method according to claim 7, further comprising:

determining a PDCCH candidate with a largest or larger CORESET identity as the reference PDCCH candidate; or

determining a PDCCH candidate with a smallest or smaller CORESET identity as the reference PDCCH candidate.

10. The channel transmission method according to claim 7, further comprising:

determining a PDCCH candidate with a largest or larger search space set identity as the reference PDCCH candidate; or

determining a PDCCH candidate with a smallest or smaller search space set identity as the reference PDCCH candidate.

11. The channel transmission method according to claim 1, further comprising:

determining a transmission time domain parameter based on the reference PDCCH candidate; or

determining a transmission frequency domain resource based on the reference PDCCH candidate.

12. The channel transmission method according to claim 1, wherein the indication information comprises first indication information, and the first indication information is used to indicate the one set of TCI states or a plurality of sets of TCI states; and

wherein the first indication information comprises medium access control control element (MAC CE) signaling, or, the first indication information comprises MAC CE signaling and downlink control information (DCI).

13. The channel transmission method according to claim 12, wherein the indication information further comprises second indication information, the first indication information is used to indicate N sets of TCI states, and the second indication information is used to indicate, among the N sets of TCI states, one or more sets of TCI states for PDCCH reception; and

wherein the second indication information comprises at least one of radio resource control (RRC) signaling, MAC CE signaling or DCI.

14. The channel transmission method according to claim 1, wherein:

the one set of TCI states comprises one joint TCI state;

the one set of TCI states comprises one downlink TCI state;

the one set of TCI states comprises one uplink TCI state; or

the one set of TCI states comprises one uplink TCI state and one downlink TCI state.

15. The channel transmission method according to claim 1, wherein the one set of TCI states indicated by the indication information is used for transmission of at least two types of channels and/or signals, including a PDCCH, and the signal comprises at least one of a channel state information reference signal (CSI-RS) or a sounding reference signal (SRS).

16. A channel transmission method, performed by an access network device, comprising:

transmitting first configuration information to a terminal, wherein the first configuration information is used to configure N search space sets having a link relationship, each of the N search space sets comprises one physical downlink control channel (PDCCH) candidate, and N is an integer greater than 1; and

transmitting indication information to the terminal, and determining from the N PDCCH candidates a reference PDCCH candidate for transmission in a case that the indication information indicates one set of transmission configuration indication (TCI) states.

**17.** The channel transmission method according to claim 15, wherein the N PDCCH candidates are used for transmission of one PDCCH;

wherein the one set of TCI states is used for one target PDCCH candidate among the N PDCCH candidates; or
the one set of TCI states is used for a plurality of PDCCH candidates among the N PDCCH candidates.

**18.** The channel transmission method according to claim 17, further comprising:
determining the target PDCCH candidate as the reference PDCCH candidate, in a case that the one set of TCI states is used for the one target PDCCH candidate.

**19.** The channel transmission method according to claim 18, further comprising:

transmitting second configuration information to the terminal, wherein the second configuration information is used to indicate a correspondence relationship between the one set of TCI states and the target PDCCH candidate; or
determining the target PDCCH candidate corresponding to the one set of TCI states from the N PDCCH candidates based on a default mapping relationship.

**20.** The channel transmission method according to claim 19, wherein:

the target PDCCH candidate is a PDCCH candidate corresponding to a smallest CORESET identity among the N PDCCH candidates;
the target PDCCH candidate is a PDCCH candidate corresponding to a smallest search space set identity among the N PDCCH candidates;
the target PDCCH candidate is a PDCCH candidate corresponding to a CORESET with a smallest CORESET pool index (CORESETPoolIndex) among the N PDCCH candidates; or
the target PDCCH candidate is a PDCCH candidate corresponding to a CORESET with a smallest CORESET group identity among the N PDCCH candidates.

**21.** The channel transmission method according to claim 17, further comprising:
determining the reference PDCCH candidate from the plurality of PDCCH candidates based on a configuration parameter relationship among the plurality of PDCCH candidates, in a case that the one set of TCI states is used for the plurality of PDCCH candidates.

**22.** The channel transmission method according to claim 21, wherein the configuration parameter relationship comprises at least one of:

a sequential order of time domain resource start symbols corresponding to the plurality of PDCCH candidates;
a sequential order of time domain resource end symbols corresponding to the plurality of PDCCH candidates;
a size relationship among CORESET identities corresponding to the plurality of PDCCH candidates; or
a size relationship among search space set identities corresponding to the plurality of PDCCH candidates.

**23.** The channel transmission method according to claim 22, further comprising:

determining a PDCCH candidate with an earlier or earliest time domain resource start symbol as the reference PDCCH candidate;
determining a PDCCH candidate with a later or latest time domain resource start symbol as the reference PDCCH candidate;
determining a PDCCH candidate with an earlier or earliest time domain resource end symbol as the reference PDCCH candidate; or
determining a PDCCH candidate with a later or latest time domain resource end symbol as the reference PDCCH candidate.

**24.** The channel transmission method according to claim 22, further comprising:

determining a PDCCH candidate with a largest or larger CORESET identity as the reference PDCCH candidate; or
determining a PDCCH candidate with a smallest or smaller CORESET identity as the reference PDCCH candidate.

**25.** The channel transmission method according to claim 22, further comprising:

determining a PDCCH candidate with a largest or larger search space set identity as the reference PDCCH candidate; or
determining a PDCCH candidate with a smallest or smaller search space set identity as the reference PDCCH candidate.

**26.** The channel transmission method according to claim 16, wherein the indication information comprises first indication information, and the first indication information is used to indicate the one set of TCI states or a plurality of sets of TCI states; and

wherein the first indication information comprises medium access control control element (MAC CE) signaling, or, the first indication information comprises MAC CE signaling and downlink control information (DCI).

27. The channel transmission method according to claim 26, wherein the indication information further comprises second indication information, the first indication information is used to indicate N sets of TCI states, and the second indication information is used to indicate, among the N sets of TCI states, one or more sets of TCI states for PDCCH reception; and wherein the second indication information comprises at least one of radio resource control (RRC) signaling, MAC CE signaling or DCI.

28. The channel transmission method according to claim 16, wherein:

    the one set of TCI states comprises one joint TCI state;
    the one set of TCI states comprises one downlink TCI state;
    the one set of TCI states comprises one uplink TCI state; or
    the one set of TCI states comprises one uplink TCI state and one downlink TCI state.

29. The channel transmission method according to claim 16, wherein the one set of TCI states indicated by the indication information is used for transmission of at least two types of channels and/or signals, including a PDCCH, and the signal comprises at least one of a CSI-RS or an SRS.

30. A channel transmission device, comprising:

    a reception module, configured to receive first configuration information, wherein the first configuration information is used to configure N search space sets having a link relationship, each of the N search space sets comprises one physical downlink control channel (PDCCH) candidate, and N is an integer greater than 1; wherein the reception module is further configured to: receive indication information, and determine from the N PDCCH candidates a reference PDCCH candidate for transmission in a case that the indication information indicates one set of transmission configuration indication (TCI) states.

31. A channel transmission device, comprising:

    a transmission module, configured to transmit first configuration information to a terminal, wherein the first configuration information is used to configure N search space sets having a link relationship, each of the N search space sets comprises one physical downlink control channel (PDCCH) candidate, and N is an integer greater than 1; wherein the transmission module is further configured to transmit indication information to the terminal, and determine from the N PDCCH candidates a reference PDCCH candidate for transmission in a case that the indication information indicates one set of transmission configuration indication (TCI) states.

32. A terminal, comprising:

    a processor;
    a transceiver connected to the processor; and
    a memory configured to store executable instructions for the processor;
    wherein the processor is configured to load and execute the executable instructions to perform the channel transmission method according to any one of claims 1 to 15.

33. An access network device, comprising:

    a processor;
    a transceiver connected to the processor; and
    a memory configured to store executable instructions for the processor;
    wherein the processor is configured to load and execute the executable instructions to perform the channel transmission method according to any one of claims 16 to 29.

34. A computer readable storage medium, wherein the computer readable storage medium is configured to store at least one instruction, at least one program, a code set or an instruction set, and the at least one instruction, the at least one program, the code set or the instruction set is loaded and executed by a processor to perform the channel transmission method according to any one of claims 1 to 29.

Core network 11

110

110

Access
network
12

120

120

13

13

FIG. 1

| First configuration information is received, where the first configuration information is used to configure N search space sets having a link relationship, and N is an integer greater than 1 | 201 |

| Indication information is received, and a reference PDCCH candidate for transmission is determined from the N PDCCH candidates in a case that the indication information indicates one set of TCI states | 202 |

FIG. 2

MO

PDCCH candidate
with an earlier start
symbol

PDCCH candidate
with a later start
symbol

310   320   t

FIG. 3

Frequency
domain
resource
400

CORESET#1

CORESET#0

FIG. 4

First configuration information is transmitted to a
terminal, where the first configuration information is
used to configure N search space sets having a link
relationship                                                501

Indication information is transmitted to the terminal,
and a reference PDCCH candidate is determined
from the N PDCCH candidates for transmission in a
case that the indication information indicates one set
of transmission configuration indication (TCI) states     502

FIG. 5

```
┌──────────────┐                              ┌──────────────────┐
│   terminal   │                              │ access network   │
│              │                              │     device       │
└──────┬───────┘                              └─────────┬────────┘
       │                                                │
       │  601, An access network device transmits first │
       │  configuration information to a terminal, where│
       │  the first configuration information is used to│
       │  configure N search space sets having a link   │
       │◄──────────────────relationship─────────────────│
       │                                                │
       │  602, The access network device transmits      │
       │◄───────indication information to the terminal───│
       │                                                │
```

603, In a case that the indication information indicates one set of transmission configuration indication (TCI) states, the terminal and the access network device determine from the N PDCCH candidates a reference PDCCH candidate for transmission

FIG. 6

```
┌─────────────────────┐  ╱ 710
│  Reception module   │ ╱
└──────────┬──────────┘
           │
┌──────────┴──────────┐  ╱ 720
│  Processing module  │ ╱
└─────────────────────┘
```

FIG. 7

```
┌─────────────────────┐  ╲ 810
│   Transmission      │   ╲
│     module          │
└──────────┬──────────┘
           │
┌──────────┴──────────┐  ╲ 820
│  Processing module  │   ╲
└─────────────────────┘
```

FIG. 8

22

FIG. 9

## INTERNATIONAL SEARCH REPORT

| | International application No. |
|---|---|
| | **PCT/CN2022/095769** |

### A. CLASSIFICATION OF SUBJECT MATTER

H04W 72/12(2009.01)i; H04W 72/04(2009.01)i

According to International Patent Classification (IPC) or to both national classification and IPC

### B. FIELDS SEARCHED

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

CNTXT, ENTXTC, WPABSC, ENTXT, WPABS, VEN, 3GPP, CJFD: 搜索空间集, 控制资源集, 链接, 关联, 物理下行控制信道, 候选, 传输配置指示, 状态, 参考, 联合, 统一, SS set, CORESET, associat+, link, PDCCH, candidate, TCI, state, reference, joint TCI, unified TCI, DCI, MAC CE

### C. DOCUMENTS CONSIDERED TO BE RELEVANT

| Category* | Citation of document, with indication, where appropriate, of the relevant passages | Relevant to claim No. |
|---|---|---|
| X | US 2021360667 A1 (ELECTRONICS & TELECOMMUNICATIONS RESEARCH INSTITUTE) 18 November 2021 (2021-11-18)<br>description, paragraphs [0062]-[0181] | 1-34 |
| X | 3GPP. "Status Report to TSG"<br>*3GPP TSG RAN Meeting #94-e RP-213470*, 01 December 2021 (2021-12-01),<br>p. 2, line 3-p. 7, line 6 | 1-34 |
| A | WO 2022083691 A1 (DATANG MOBILE COMMUNICATIONS EQUIPMENT CO., LTD.) 28 April 2022 (2022-04-28)<br>entire document | 1-34 |
| A | CN 114175821 A (BEIJING XIAOMI MOBILE SOFTWARE CO., LTD.) 11 March 2022 (2022-03-11)<br>entire document | 1-34 |
| A | US 2021235455 A1 (QUALCOMM INC.) 29 July 2021 (2021-07-29)<br>entire document | 1-34 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 November 2022** | **29 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|---|
| **PCT/CN2022/095769** |

| Patent document cited in search report | | | Publication date (day/month/year) | Patent family member(s) | | | Publication date (day/month/year) |
|---|---|---|---|---|---|---|---|
| US | 2021360667 | A1 | 18 November 2021 | KR | 20210139153 | A | 22 November 2021 |
| WO | 2022083691 | A1 | 28 April 2022 | TW | 202218473 | A | 01 May 2022 |
| | | | | CN | 114499784 | A | 13 May 2022 |
| CN | 114175821 | A | 11 March 2022 | | None | | |
| US | 2021235455 | A1 | 29 July 2021 | WO | 2021154486 | A1 | 05 August 2021 |
| | | | | CN | 115039365 | A | 09 September 2022 |
| | | | | KR | 20220131914 | A | 29 September 2022 |
| | | | | BR | 112022014351 | A2 | 13 September 2022 |
| | | | | TW | 202133667 | A | 01 September 2021 |

Form PCT/ISA/210 (patent family annex) (January 2015)